# EUROPEAN PATENT APPLICATION

(11) **EP 2 315 443 A1**
(43) Date of publication of application: **27.04.2011**
(21) Application number: 10187888.2
(22) Date of filing: 18.10.2010
(51) Int. Cl.: H04N 7/24

(54) **Instant image processing system, method for processing instant image and image transferring device**

(30) Priority: 20.10.2009 CN 200910180896
(71) Applicant: ASUSTeK Computer Inc., Peitou, Taipei 112 (TW)
(72) Inventor: Wang, Sheng-Hung, Peitou, Taipei (TW)
(74) Representative: 2K Patentanwälte Blasberg Kewitz & Reichel

(57) **Abstract**

The invention discloses an instant image processing system comprising a graphic processing module (12) and a format transforming module (14). The graphic processing module (12) is used to receive a video signal and execute a digital image processing program on the video signal to generate processed video data. In response to a remote display demand, the format transforming module (14) transforms the processed video data to transformed video data with a network transmission format.

## Description

### Background of the invention

### Field of invention

The invention relates to a multi-media system and, more particularly, to a multi-media system in which image signals are transmitted by network.

### Related Art

With the development of electronic products improving, household multi-media systems become more and more popular. Among those multi-media systems, the most important equipment is the display equipment showing images. In recent years, it is a trend to install the television system in the bedroom with the personal computer system. Besides displaying television signals transmitted in a wired or wireless way or the images from peripheral equipment such as a digital versatile disc (DVD) player, the television systems integrated with computer systems can also be used to display images in the computer.

The screen size of a television screen is usually larger than that of a computer. Users rather use the larger television screen instead the computer screen when playing games or watching movies. Moreover, users want to use the disk drive of the computer system and play movies on the television, thereby the cost for buying a DVD player and the space for disposing the DVD player next to the television are saved.

The conventional way of connecting the television system and the personal computer system is by a transmission wire. However, if the two systems dispose far from each other, it is troublesome to integrate the two systems since the transmission wires that occupy spaces and would be not easy to keep the space neat. Furthermore, if the signals transfer within a long distance, the image quality also may be interfered.

To solve the problem, a method has been provided to transmit the data in the personal computer to the television system through a wireless network. However, the computer system always needs a central processing unit (CPU) to process images, and transfers the data to the television system through a network adapter in both wired and wireless ways in prior arts.

However, some disadvantages present in prior arts. For example, a CPU in computer systems of most families is conventionally a common processor and is not specific for processing images. Therefore, it is not efficient to process image programs by the CPU. Especially, the CPU may not process some complex image processing programs. In other words, the CPU of the computer system cannot provide image processing program with high quality and high efficiency.

Since the CPU cannot execute image processing programs fast, the processed image data cannot be transferred to the television system instantly, or they cannot be displayed instantly after they are transferred to the television system. To make sure that the television system would not interrupted during display, the computer system or the television system needs a buffer storage with a large capacity to temporarily store the image data which are not displayed.

In another aspect, when a complex image is processed, the load of the CPU may be large, and the CPU cannot perform its own operation, which greatly reduces the operating speed of other programs in computer system.

### Summary of the invention

The invention discloses a system, a method and a device for processing instant images. According to the system, the method and the device disclosed in the invention, a graphic processing module is used to provide high-quality images for a display device. Therefore, a buffer storage is not needed, and the hardware cost is reduced. Furthermore, according to the system, the method and the device in the invention, the load of the central processing unit (CPU) is reduced, and the whole efficiency of the computer system is also improved.

According to an embodiment of the invention, an instant image processing system is disclosed. The instant image processing system includes a graphic processing module and a format transforming module. The graphic processing module is used to receive a video signal and execute a digital image processing program on the video signal to generate processed video data. In response to a remote display demand, the format transforming module transforms the processed video data to transformed video data with a network transmission format.

According to another aspect of the invention, an image transferring device cooperating with a graphic processing module is disclosed. The image transferring device includes a format transforming module and a transferring module. In response to a remote display demand, the format transforming module transforms the processed video data generated by the graphic processing module to transformed video data with a network transmission format. The transferring module is used to transfer the transformed video data.

According to still another aspect of the invention, a method for processing an instant image is disclosed. In the method, a video signal is received first. Then, a digital image processing program is executed on the video signal to generate processed video data. In response to a remote display demand, the processed video data is transformed to transformed video data with a network transmission format.

According to the system, the method and the device in the invention, high-quality images can be provided to the remote display. Therefore, a buffer storage is not needed, and the cost is also reduced. In addition, according to the system, the method and the device of the invention, the load of CPU is reduced, and the whole efficiency of the computer system is improved.

These and other features, aspects and advantages of the present invention will become better understood with regard to the following description, appended claims, and accompanying drawings.

### Brief description of the drawings

FIG. 1 is a block diagram showing the instant image processing system in a first embodiment of the invention.

FIG. 2 is a schematic diagram showing the connection of the instant image processing system, the computer system and the television system according to an embodiment of the invention.

FIG. 3 is a flow chart showing the method for processing instant images in an embodiment of the invention.

### Detailed description of the invention

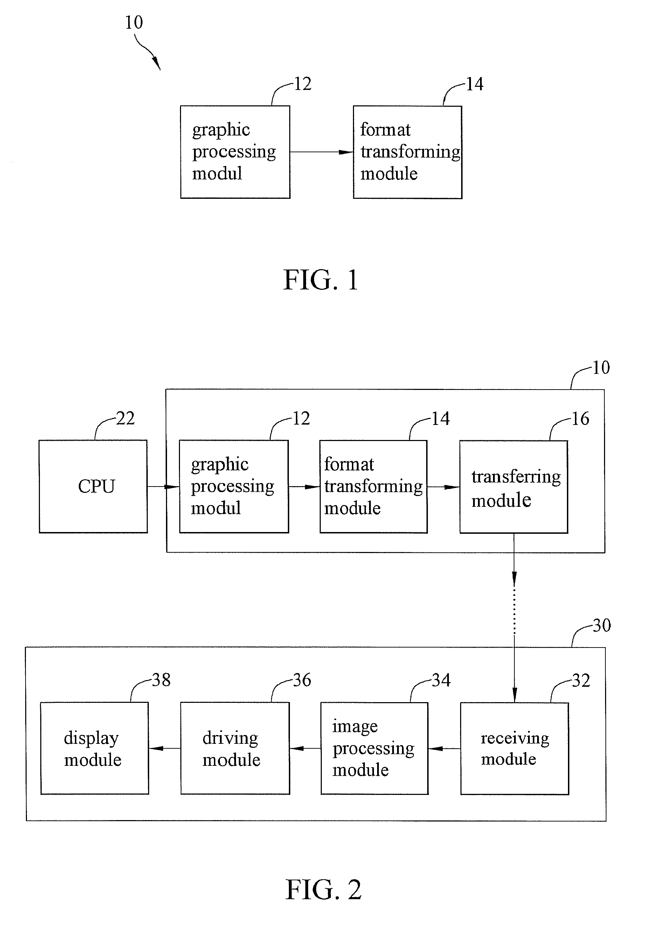

FIG. 1 is a block diagram showing an instant image processing system in a first embodiment of the invention. An instant image processing system 10 includes a graphic processing module 12 and a format transforming module 14. In practical usage, the graphic processing module 12 can be integrated in a graphics card of the computer system. In other words, the graphic processing module 12 can be achieved by a graphic processing unit (GPU), which is the core component of the graphics card.

The graphic processing module 12 is used to receive a video signal and execute a digital image processing program on the video signal to generate a processed video data. In practical usage, the video signal may correspond to one or more images, and it also may correspond to one or more videos. In another aspect, the digital image processing program may be a two-dimensional (2D) or three-dimensional (3D) image processing program. For example, the digital image processing program may execute a texture mapping, rendering, illumination, atomization and other calculations according to the 3D data included in the video signal. Regardless of the image processing programs, compared with the general CPU, the graphic processing module 12 specially designed for processing image can achieve higher efficiency.

When the instant image processing system 10 receives a remote display demand, it needs to transfer images to a remote television system. The format transforming module 14 in the embodiment of the invention is responsible for transforming processed video data outputted by the graphic processing module 12 to transformed video data with a network transmission format.

FIG. 2 is a schematic diagram showing the connection of the instant image processing system 10, the computer system and the television system in practical usage in an embodiment of the invention.

In the embodiment, the graphic processing module 12 receives the signal transmitted from the CPU 22 of the computer system. In practical usage, besides the video signal, the graphics card signal also may include commands relating to how to process the video signal. The graphic processing module 12 may execute the digital image processing program according to the requirement of the CPU 22. If the graphic processing module 12 is integrated in the graphics card of the computer system, the instant image processing system 10 and the CPU 22 may be connected to each other via the slots with formats such as an accelerated graphics port (AGP), a peripheral component Interconnect (PCI), an industrial standard architecture (ISA) and a PCI-express (PCI-E) formats.

As shown in FIG. 2, the instant image processing system 10 further includes a transferring module 16 for transferring the transformed video data generated by the format transforming module 14. The transferring module 16 may be a wired transferring module (such as a wired network adapter conforming the 10G Ethernet specification) or a wireless transferring device (such as a wireless network adapter conforming the 802.11 a/b/g/n specification), as long as its network transmission format is in accordance with the network transmission format adapted by the format transforming module 14.

The instant image processing system 10 and the television system 30 can be connected to each other by local area network or Internet. In the embodiment, the television system 30 includes a receiving module 32, an image processing module 34, a driving module 36 and a display module 38.

Besides receiving the transformed video data transferred by the instant image processing system 10, the receiving module 32 also transfers data with the network transmission format to image data which can be identified by the following circuit. The image processing module 34 is used to provide image processing programs such as the over-driving calculation, thereby further improving the image quality. The driving module 36 is used to transform the image data to a driving voltage for controlling the display module 38.

As shown in FIG. 2, since the instant image processing system 10 in the embodiment of the invention is highly efficient, the television system 30 or the instant image processing system 10 does not need an additional buffer for temporarily storing image data, and therefore the hardware cost is reduced. In addition, the graphic processing module 12 shares the task of the CPU, and the efficiency of the computer system may not be affected by the image with the remote display demand.

In a second aspect of the invention, an image transferring device is provided, and the image transferring device includes a format transforming module 14 and a transferring module 16, which are shown in FIG. 2. In other words, the image transferring device may be a bridge for communicating the graphic processing module 12 and the television system 30. In response to the remote display demand generated by the television system 30 or the CPU 22, the format transforming module 14 in the embodiment may transform the processed video data generated by the graphic processing module 12 to transformed video data with the network transmission format. Afterwards, the transferring module 16 transfers the transformed video data to the television system 30.

The same as the former embodiment, the processed video data received by the image transferring device in the embodiment may correspond to a single image or multiple images, and it also may correspond to a single video or multiple videos. Cooperating with the graphic processing module 12, the image transferring device in the embodiment also may provide high-quality images. Particularly, both the instant image processing systems in the former embodiment and the image transferring device in this embodiment can cooperate with other display devices except for the television system in the embodiment, which is not limited to be television system.

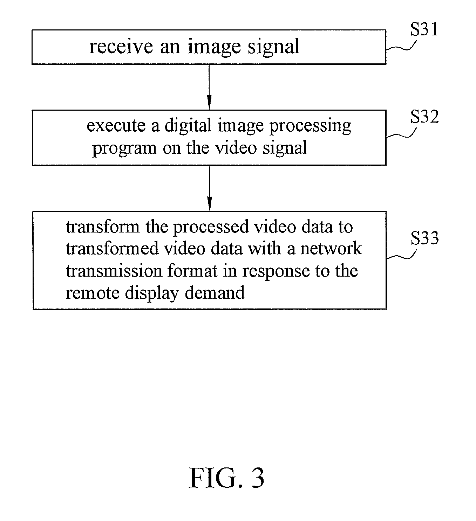

In another aspect, the invention provides a method for processing instant images cooperating with a graphic processing module. As shown in FIG. 3, it is a flow chart showing the method. Firstly, step S31 is performed to receive a video signal. In step S32, a digital image processing program is executed on the video signal to generate a processed video data. Then, in step S33, in response to a remote display demand, the processed video data is transformed to transformed video data with a network transmission format. In practical usage, the method may further include the step of transferring the transformed video data. In addition, in practical usage, the video signal received in step S31 may be a graphics card signal, and in step S31, the video signal also may be received by the computer system or a CPU, which is not limited herein.

As illustrated above, by using the graphic processing module with higher ability to process images, in the system, the method and the device of the invention, high-quality images may be provided to a remote display device. Therefore, the cost of a buffer storage is saved. In addition, in the system, the method and the device of the invention, the load of CPU is reduced, and the whole efficiency of the computer system is improved.
In summary the invention discloses an instant image processing system comprising a graphic processing module and a format transforming module. The graphic processing module is used to receive a video signal and execute a digital image processing program on the video signal to generate processed video data. In response to a remote display demand, the format transforming module transforms the processed video data to transformed video data with a network transmission format.

Although the present invention has been described in considerable detail with reference to certain preferred embodiments thereof, the disclosure is not for limiting the scope of the invention. Persons having ordinary skill in the art may make various modifications and changes without departing from the scope. Therefore, the scope of the appended claims should not be limited to the description of the preferred embodiments described above.

## Claims

1. An instant image processing system comprising:
a graphic processing module (12) for receiving a video signal and executing a digital image processing program on the video signal to generate processed video data; and
a format transforming module (14) electrically connected to the graphic processing module, wherein the format transforming module transforms the processed video data to transformed video data with a network transmission format in response to a remote display demand.

2. The instant image processing system according to claim 1, further comprising:
a transferring module (16) for transferring the transformed video data.

3. The instant image processing system according to claim 1 or 2, wherein the graphic processing module (12) is integrated in a graphics card.

4. The instant image processing system according to one of the preceding claims, wherein the video signal is a graphics card signal, and the video signal is transmitted to the graphic processing module (12) by a central processing unit (CPU) in a computer system.

5. The instant image processing system according to one of the preceding claims, wherein the video signal corresponds to an image or a video.

6. An image transferring device for cooperating with a graphic processing module (12), comprising:
a format transforming module (14) electrically connected to the graphic processing module, wherein the format transforming module transforms processed video data generated by the graphic processing module to transformed video data with a network transmission format in response to a remote display demand; and
a transferring module (16) for transferring the transformed video data.

7. The image transferring device according to claim 6, wherein the graphic processing module (12) is integrated in the graphics card for receiving video signal from a CPU of a computer system and executing a digital image processing program to the video signal to generate the processed video data.

8. The image transferring device according to claim 6 or 7, wherein the processed video data corresponds to an image or a video.

9. A method for processing instant image cooperating with a graphic processing module comprising the steps of:
receiving a video signal (S31);
executing a digital image processing program on the video signal in the graphic processing module to generate processed video data (S32); and
transforming the processed video data to transformed video data with a network transmission format in response to a remote display demand (S32).

10. The method for processing the instant image according to claim 9, further comprising the steps of:
transferring the transformed video data.

11. The method for processing the instant image according to claim 9 or 10, wherein the video signal is a graphics card signal, and the video signal is received by a CPU of a computer system.

12. The method for processing the instant image according to one of the claims 9 to 11, wherein the video signal corresponds to an image or a video.
